# EUROPEAN PATENT APPLICATION

(11) **EP 3 480 121 A1**
(43) Date of publication of application: **08.05.2019**
(21) Application number: 17848493.7
(22) Date of filing: 04.08.2017
(51) Int. Cl.: B64G 1/14, B64G 1/24

(54) **SPACECRAFT AND LANDING METHOD THEREFOR**

(30) Priority: 08.09.2016 JP 2016175109
(71) Applicant: Mitsubishi Heavy Industries, Ltd., Chiyoda-ku, Tokyo 1008332 (JP)
(72) Inventor: KOBAYAKAWA, Toyonori, Tokyo 108-8215 (JP); HABAGUCHI, Yuta, Tokyo 108-8215 (JP)
(74) Representative: Henkel, Breuer & Partner
(86) International application number: PCT/JP2017/028439
(87) International publication number: WO 2018/047549

(57) **Abstract**

A spacecraft (10) is provided configured so that after entering the atmosphere by a nose entry, the spacecraft (10) changes posture so as to achieve a target posture angle in which a vertical landing can be performed, and then lands after the posture change. The spacecraft (10) is equipped with: a fuselage (1); a rocket engine (2) attached to the fuselage (1); an aerodynamic element (5) attached to the fuselage, on which aerodynamic force acts; an observation amount acquisition system (7) for acquiring at least one observation amount of the spacecraft (10); and a control device (8) for calculating an operation amount for operating a gimbal steering angle of the rocket engine (2) and/or the aerodynamic characteristics of the aerodynamic element (5). The control device (8) is configured so as to calculate the operation amount in accordance with the observation amount so that during the posture change, the posture angle of the spacecraft (10) achieves, with a nonlinear optimal control using the stable manifold method, the target posture angle at which the vertical landing can be performed.

## Description

### Technical Field

The present invention relates to a spacecraft and a landing method.

### Background Art

To reduce the cost for access to the space, a research of the reusable launch vehicle is extensively carried forward. As be described below, various reusable launch vehicles have been proposed.

Patent Literature 1 (Japanese Patent 5,508,017) discloses a spacecraft which includes an aircraft engine, a rocket propulsion unit and a wing, and which flies in the atmosphere by using the aircraft engine and flies in the space by using the rocket propulsion unit, and which returns to the ground by using either of gliding or engine flight after reentry into the atmosphere.

Patent Literature 2 (JP 2012-530020A) discloses a space launch vehicle configured to recover a booster stage. After the space launch vehicle is launched, a booster stage is separated from the upper stage. The booster stage re-enters the atmosphere in orientation of the aft section to the earth. The booster stage carries out the powered vertical landing on a deck point positioned previously of a marine sailing platform.

However, there is a problem on the operation in the reusable launch vehicle disclosed in these Patent Literatures. For example, in the technique disclosed in Patent Literature 1, the facilities with the same large-sized scale as an airport is required for take-off and landing to carry out horizontal taking off and landing like the airplane. Also, in the technique of Patent Literature 2, the platform must be deployed previously on the sea to recover the booster stage and transported to a port after the collection.

### Citation List

### [Patent Literature]

[Patent Literature 1] Japanese Patent No. 5,508,017
[Patent Literature 2] JP 2012-530020A

### [Non-Patent Literature]

[Non-Patent Literature 1] The Institute of Systems, Control and Information Engineers "Systems, Control and Information", vol. 7, No. 13, pp. 1-6, 1996
[Non-Patent Literature 2] Journal of Japan Society for Aeronautical and Space Sciences, Vol. 61, No. 1, pp. 1-8, 2013

### Summary of the Invention

Therefore, an object of the present invention is to provide a spacecraft which is excellent in the operability. The other objects of the present invention would be understood by the skilled person from the following disclosure.

According to an aspect of the present invention, a spacecraft is provided that is configured to carry out the attitude change to a target attitude angle for vertical landing, after reentry into the atmosphere in a nose entry, and to carry out the vertical landing after the attitude change.

The spacecraft includes a body; a rocket engine installed in the body; an aerodynamic element which is installed in the body and on which aerodynamic force acts; a measurement quantity acquiring system configured to acquire at least one measurement quantity of the spacecraft; and a control device configured to calculate an operation quantity to operate at least one of a gimbal angle of the rocket engine and an aerodynamic characteristic of the aerodynamic element. The control device is configured to calculate the operation quantity according to the measurement quantity by a non-linear optimal control using a stable manifold method in the attitude change such that the attitude angle of the spacecraft is changed to the target attitude angle.

In one embodiment, the measurement quantity contains an angle-of-attack of the spacecraft. In this case, it is desirable that the control device controls the attitude angle of the spacecraft in response to the angle-of-attack in the attitude change.

The control device may calculate the angle-of-attack of the spacecraft based on the at least one measurement quantity. In this case, it is desirable that the control device controls the attitude angle of the spacecraft in response to the calculated angle-of-attack in the attitude change. Especially, when the measurement quantity contains an acceleration of the spacecraft, it is desirable that the control device calculates the angle-of-attack of the spacecraft based on the acceleration.

In the embodiment, the control device controls the spacecraft to start the attitude change after the spacecraft reaches a setting region set previously near a landing point for the spacecraft to be landed, and to lower the spacecraft and to land at the landing point while controlling a position of the spacecraft in a horizontal plane, after the attitude angle of the spacecraft is controlled to the target attitude angle through the attitude change.

According to another aspect of the present invention, a spacecraft includes a body; a rocket engine installed on the body; an aerodynamic element installed on the body for an aerial force to act; a measurement quantity acquiring system configured to acquire at least one measurement quantity of the spacecraft; and a control device configured to calculate an operation quantity for an operation of at least one of a gimbal angle and an aerodynamic characteristic of the aerodynamic element in the rocket engine. The acquired measurement quantity contains an angle-of-attack of the spacecraft. The control device is configured to calculate one operation quantity such that the attitude angle of the spacecraft changes to the target attitude angle according to the angle-of-attack in the attitude change.

According to still another aspect of the present invention, a landing method of a spacecraft is provided which includes a body; a rocket engine installed on the body; and an aerodynamic element installed on the body for an aerial force to act. The landing method includes (A) a spacecraft rushing into the atmosphere in a nose entry; (B) carrying out an attitude change of the spacecraft such that an attitude angle of the spacecraft change to a target attitude angle in which a vertical landing is carried out, after the (A) step; and (C) carrying out the vertical landing of the spacecraft after the attitude change. The (B) step includes acquiring at least one measurement quantity of the spacecraft; and calculating an operation quantity to operate at least one of a gimbal angle of the rocket engine and an aerodynamic characteristic of the aerodynamic element according to the measurement quantity by a non-linear optimal control using a stable manifold method such that the attitude angle of the spacecraft changes to a target attitude angle.

The landing method may further include (D) making the spacecraft fly while getting a lift force from the atmosphere such that the spacecraft reaches a setting region set previously near a landing point at which the spacecraft is to be landed. In this case, it is desirable that the attitude change is started after the spacecraft reaches the setting region.

According to the present invention, the spacecraft which is excellent in the operability can be provided.

### Brief Description of the Drawings

FIG. 1 is a front view schematically showing a configuration of a spacecraft according to an embodiment.
FIG. 2 is a block diagram schematically showing a configuration of a control system installed in the spacecraft according to the present embodiment.
FIG. 3 is a diagram showing the definition of attitude angle and angle of attack in the spacecraft according to the present embodiment.
FIG. 4 is a diagram conceptually showing a landing motion of the spacecraft according to the present embodiment.
FIG. 5 is a graph showing an example of behavior of the spacecraft in an attitude change where a robustness to external disturbance and a convergence of attitude angle are lack.
FIG. 6 is a control block diagram showing the control of attitude angle in the spacecraft in case of attitude change.
FIG. 7 is a graph showing an example of behavior of the spacecraft when a non-linear optimal control using a stable manifold method is carried out in the attitude change.

### Description of the Embodiments

Hereinafter, referring to the attached drawings, embodiments of the present invention will be described.

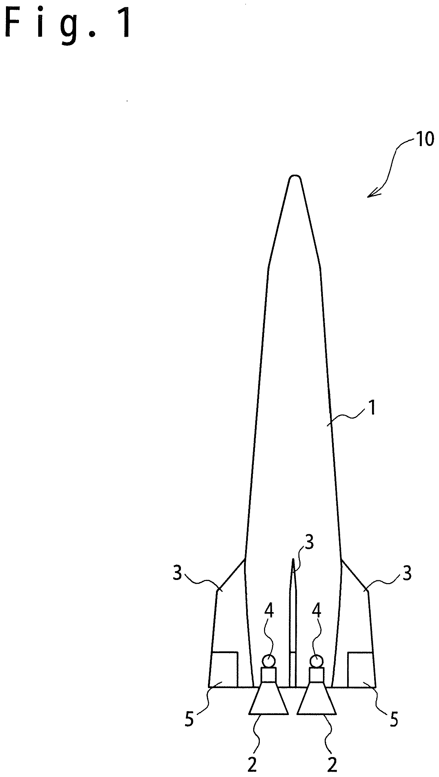

FIG. 1 is a front view showing a configuration of a spacecraft 10 according to an embodiment of the present invention. In the present embodiment, the spacecraft 10 is configured as a reusable-type launch vehicle. However, note that the present invention can be applied to the spacecraft of various types which carry out vertical landing. The spacecraft 10 has a body 1, rocket engines 2 and fins (wings) 3. The rocket engine 2 forms an ejection flow of propulsion material to generate a thrust. In the present embodiment, a plurality of rocket engines 2 are provided for the spacecraft 10. However, the rocket engine 2 may be single.

Each of the rocket engines 2 is supported by a gimbal 4 disposed in the lower end section of body 1. It is possible to control a gimbal angle of the rocket engine 2 (that is, an orientation of a nozzle of the rocket engine 2) by the gimbal 4. The gimbal angle can be defined as two argument angles that prescribe a direction of the central axis of the nozzle of the rocket engine 2 in a spherical coordinate system defined to move with the spacecraft 10.

The fin 3 is installed on the outer surface of body 1 and is used as an aerodynamic element to make desired aerodynamic force act on the spacecraft 10 in case of flight in the atmosphere. In the present embodiment, a rudder 5 is provided for each of the fins 3. Also, by controlling a steering angle of the rudder 5, it is possible to control the aerodynamic characteristic of the fin 3, i.e. the aerodynamic force which acts on the fin 3.

Note that various types of aerodynamic elements may be used to make a desired aerodynamic force to act to the spacecraft 10, instead of or in addition to the fin 3. For example, as the aerodynamic element, a flap may be provided and also a canard in which an angle is adjustable may be provided.

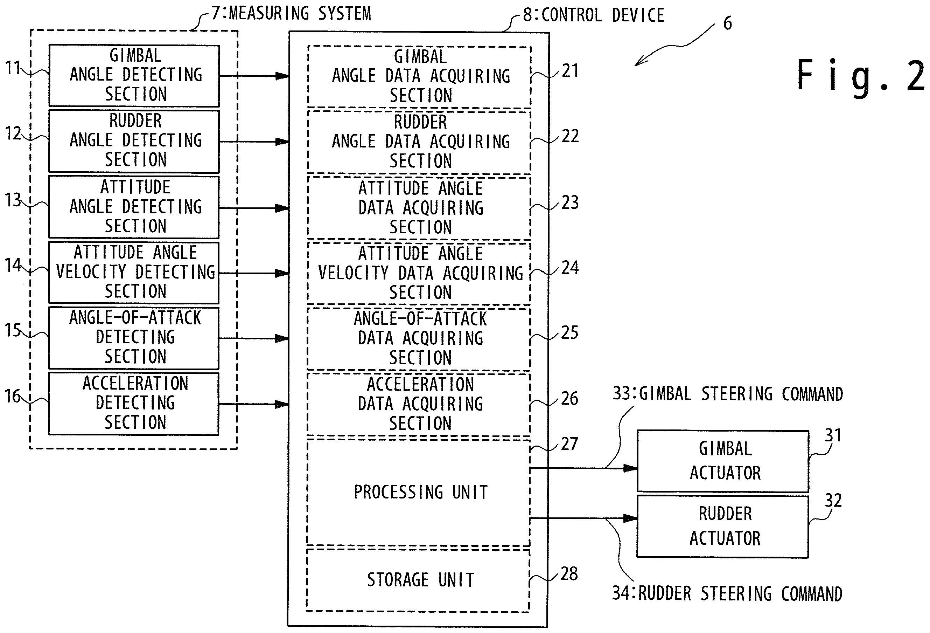

FIG. 2 is a block diagram schematically showing a configuration of the control system 6 which is loaded into the spacecraft 10. The control system 6 has a measuring system 7 and a control device 8.

The measuring system 7 acquires various measurement quantities of the spacecraft 10. In the present embodiment, the measuring system 7 includes a gimbal angle detecting section 11, a rudder angle detecting section 12, an attitude angle detecting section 13, an attitude angular velocity detecting section 14, an angle-of-attack detecting section 15, and an acceleration detecting section 16.

The gimbal angle detecting section 11 detects the gimbal angle of the rocket engine 2, and generates gimbal angle data showing the detected gimbal angle.

The rudder angle detecting section 12 detects the steering angle of the rudder 5, and generates rudder angle data showing the detected steering angle.

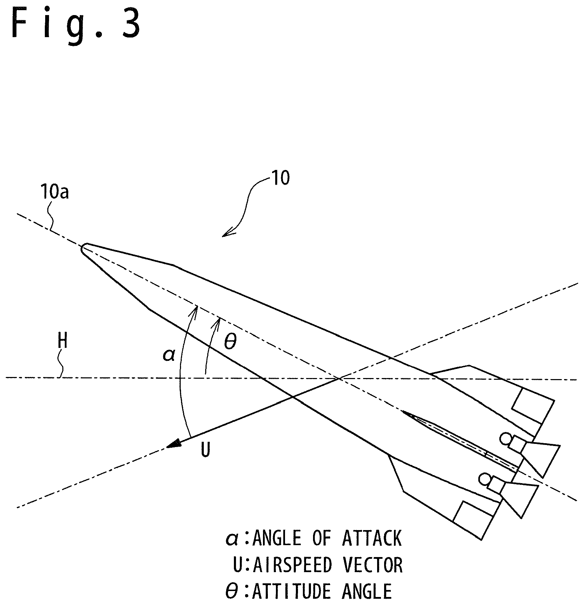

The attitude angle detecting section 13 detects the attitude angle of the spacecraft 10, and generates attitude angle data showing the detected attitude angle. In the present embodiment, as shown in FIG. 3, the attitude angle θ is defined as an angle between a horizontal plane H and a reference axis 10a (typically, a central axis) prescribed to the spacecraft 10.

Referring to FIG. 2 again, the attitude angular velocity detecting section 14 detects an attitude angular velocity of the spacecraft 10 (a variation of the attitude angle in unit time), and generates attitude angular velocity data showing the detected attitude angular velocity.

The angle-of-attack detecting section 15 detects the angle-of-attack of the spacecraft 10 and generates angle-of-attack data showing the detected angle-of-attack. In the present embodiment, as shown in FIG. 3, the angle-of-attack α is defined as an angle between the reference axis 10a of the spacecraft 10 and an airspeed vector U (that is, a velocity vector of the spacecraft 10 to air).

Referring to FIG. 2 again, the acceleration detecting section 16 detects the acceleration of the spacecraft 10, and generates acceleration data showing the detected acceleration.

Note that it is sufficient that the measuring system 7 is configured to acquire measurement quantities necessary for the control of the spacecraft 10. It is not always necessary that the measuring system 7 contains all of the gimbal angle detecting section 11, the rudder angle detecting section 12, the attitude angle detecting section 13, the attitude angular velocity detecting section 14, the angle-of-attack detecting sections 15, and the acceleration detecting sections 16.

The control device 8 controls based on the measurement quantities acquired by the measuring system 7, a gimbal actuator 31 which controls the gimbal angles of the rocket engines 2, and an actuator which controls the aerodynamic characteristics of aerodynamic elements provided for the spacecraft 10, in the present embodiment, a rudder actuator 32 which controls the steering angles of the rudders 5. The control device 8 includes a gimbal angle data acquiring section 21, a rudder angle data acquiring section 22, an attitude angle data acquiring section 23, an attitude angular velocity data acquiring section 24, an angle-of-attack data acquiring section 25, an acceleration data acquiring section 26, a processing unit 27, and a storage unit 28.

The gimbal angle data acquiring section 21 acquires the gimbal angle data from the gimbal angle detecting section 11. The rudder angle data acquiring section 22 acquires the rudder angle data from the rudder angle detecting section 12. The attitude angle data acquiring section 23 acquires the attitude angle data from the attitude angle detecting section 13. The attitude angular velocity data acquiring section 24 acquires the attitude angular velocity data from the attitude angular velocity detecting section 14. The angle-of-attack data acquiring section 25 acquires the angle-of-attack data from the angle-of-attack detecting section 15. The acceleration data acquiring section 26 acquires the acceleration data from the acceleration detecting section 16.

The processing unit 27 carries out various operations for control of the spacecraft 10. For example, in the present embodiment, the processing unit 27 generates a gimbal steering command 33 showing an operation quantity of the gimbal actuator 31 and a rudder steering and 34 showing an operation quantity of the rudder actuator 32 based on the gimbal angle data, the rudder angle data, the attitude angle data, the attitude angular velocity data, the angle-of-attack data and the acceleration data. As described later, in the present embodiment, the operation quantities of the gimbal actuator 31 and the rudder actuator 32 are calculated by a non-linear optimal control using a stable manifold method.

The storage unit 28 stores various programs and data used for the calculation by the processing unit 27.

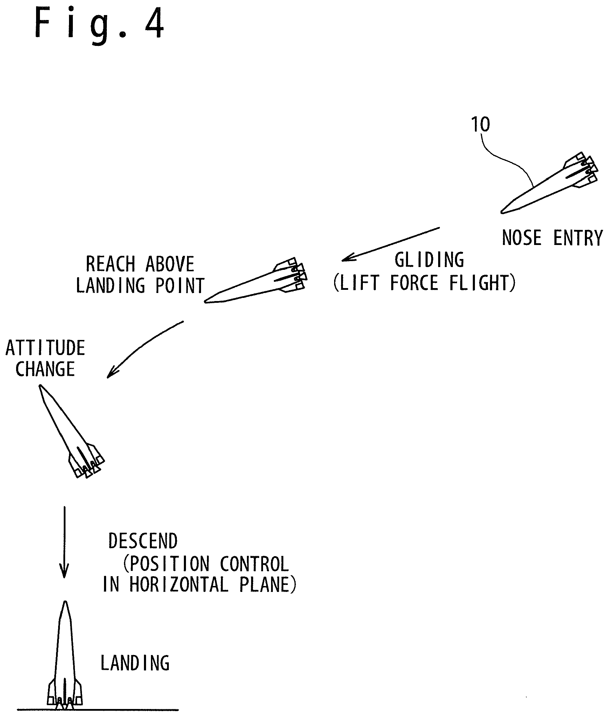

Next, the landing motion of the spacecraft 10 in the present embodiment will be described. FIG. 4 is a diagram schematically showing the landing motion of the spacecraft 10 of the present embodiment.

That is, the spacecraft 10 launched for the space reenters into the atmosphere from a nose (that is, in the present embodiment, an end opposite to the end of the body 1 where the rocket engine 2 is provided) in the nose entry.

After reentry into the atmosphere, the spacecraft 10 flies while receiving a lift force from the atmosphere, and reaches above a landing point. The lift force is generated by the fin 3 or by the body itself of the spacecraft 10. After reaching above the landing point (more strictly, reaching a predetermined region set previously above the landing point), the spacecraft 10 changes the attitude to take a target attitude angle (most typically, 90°) in case of the vertical landing. After that, the spacecraft 10 descends while controlling a position of the spacecraft 10 in a horizontal plane, and lands vertically on the desired landing point.

Such a landing motion is desired for the improvement of operability of the spacecraft 10. More specifically, according to the landing motion in the present embodiment, because the spacecraft 10 flies to a region above the target landing point while receiving the lift force from the atmosphere, the landing point can be freely selected. Also, because the spacecraft 10 carries out the vertical landing, the scale of the facilities to be provided for the landing point can be reduced. In addition, because the large change of the attitude (typically, a change of the attitude angle exceeding 90°) is carried out immediately before the landing so that the direction of thrust is changed to decelerate the spacecraft 10, there is an advantage that it is possible to decrease fuel consumption for the deceleration.

One of the difficulties which would occur in the above-mentioned landing motion is the robustness and convergence of control when carrying out the large attitude change. When the large attitude change is carried out, the aerodynamic disturbance becomes large since the angle-of-attack is large. Also, the disturbance becomes large due to sloshing of propulsion material of the rocket engines 2. Thus, the disturbance becomes large, whereas, there is a limitation in the performance of an actuator (the gimbal actuator 31 and the rudder actuator 32 in the present embodiment) to control the gimbal angle of the rocket engines 2 and the steering angle of the rudder 5. For example, there is the limitation in a change speed of the gimbal angle of the rocket engines 2 and the steering angle of the rudder 5. Therefore, there is a case where the robustness is lacked, and the convergence of the attitude angle of the spacecraft 10 becomes adverse.

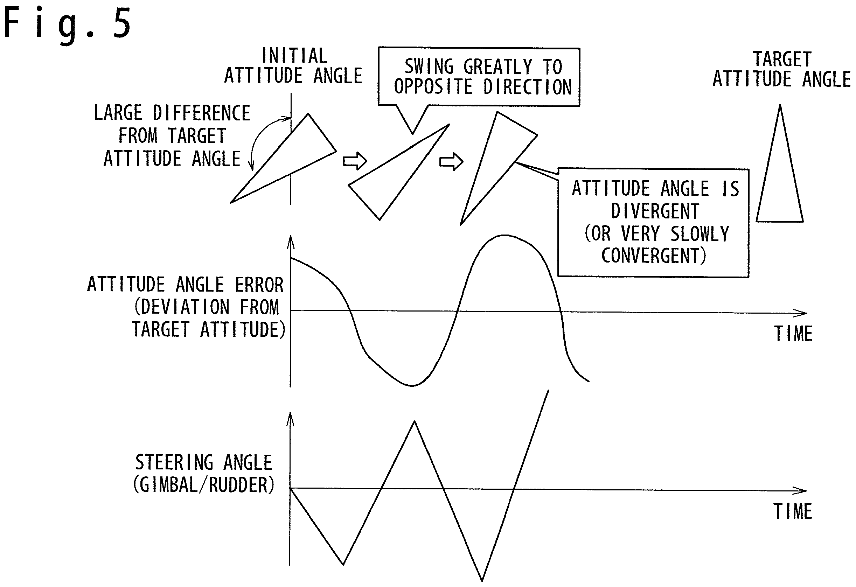

FIG. 5 is a graph conceptually showing an example of behavior of the spacecraft 10 in the attitude change when the robustness to the disturbance and the convergence of the attitude angle are lacked. Because a difference between the attitude angle at the start of attitude change and the target attitude angle in the vertical landing is large, there is a situation that the attitude angle swings greatly over the target attitude angle. Therefore, the situation that the attitude angle is divergent and a situation that the angle is very slowly convergent can occur.

To measure such a problem in the present embodiment, the operation quantities of the gimbal actuator 31 and the rudder actuator 32 are calculated by the non-linear optimal control using the stable manifold method. The stable manifold method is one of the methods of calculating a stabilization solution of the Hamilton-Jacobi equation in a problem of non-linear optimal control. A stable manifold of Hamilton system corresponding to the Hamilton- Jacobi equation is determined, and a solution is determined on the stable manifold. For example, the non-linear optimal control using the stable manifold method is disclosed in the following reference: The Institute of Systems, Control and Information Engineers "Systems, Control and Information", vol. 7, No. 13, pp. 1-6, 1996

Journal of the Japan Society for Aeronautical and Space Sciences, Vol. 61, No. 1, pp. 1-8, 2013

The problem that an optimal solution of operation quantities of the gimbal actuator 31 and the rudder actuator 32 are calculated based on the measurement quantities acquired from the measuring system 7 can be described as the Hamilton-Jacobi equation. By calculating the optimal solution of the operation quantities of the gimbal actuator 31 and the rudder actuator 32 by the stable manifold method, the control can be realized which is robust to the disturbance and is high in the convergence. In the implementing of the stable manifold method, a relation of the measurement quantities acquired by the measuring system 7 and the operation quantities of the gimbal actuator 31 and the rudder actuator 32 is described by a polynomial or mapping data. , and the operation quantities of the gimbal actuator 31 and the rudder actuator 32 are calculated from the acquired measurement quantities by using the polynomial or through the mapping using the mapping data.

To reduce the difficulty of control of the attitude angle, a method may be adopted in which the attitude change and the control of a position of the spacecraft in a horizontal plane are carried out in different steps. The landing motion when this method is adopted is shown in FIG. 4. In detail, the attitude angle of the spacecraft 10 is controlled to the target attitude angle in the vertical landing in the attitude change, and after the attitude angle is controlled to the target attitude angle, the spacecraft 10 descends while controlling the position of the spacecraft 10 in a horizontal plane. In the attitude change, the position of the spacecraft 10 in the horizontal plane is not controlled. According to such a method, the difficulty in the attitude angle control can be reduced.

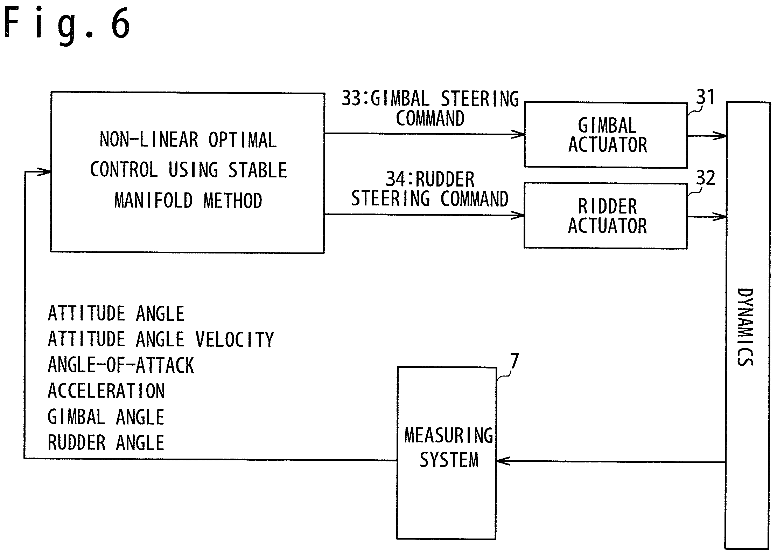

FIG. 6 is a control block diagram showing the control of the attitude angle of the spacecraft 10 in the attitude change. The dynamics of the spacecraft 10 is measured by the measuring system 7 and the measurement quantities are acquired. In the present embodiment, the attitude angle, the attitude angular velocity, the angle-of-attack, the acceleration, the gimbal angle, and the steering angle of the rudder 5 are acquired. Based on the attitude angle, the attitude angular velocity, the angle-of-attack, the acceleration, the gimbal angle and the steering angle of the rudder 5, the non-linear optimal control using the stable manifold method is carried out to calculate the operation quantities of the gimbal actuator 31 and the rudder actuator 32, and thus, the gimbal steering command 33 and the rudder steering command 34 are generated to indicate the calculated operation quantities. The non-linear optimal control using the stable manifold method is carried out by the processing unit 27. The gimbal steering command 33 and the rudder steering command 34 are supplied to the gimbal actuator 31 and the rudder actuator 32, respectively, and thus, the gimbal angle of the rocket engines 2 and the steering angle of the rudders 5 are controlled.

It is useful in the control of the attitude angle of the spacecraft 10 that the measurement quantities acquired by the measuring system 7 contain the angle-of-attack of the spacecraft 10. In the present embodiment, since a large attitude change is carried out, the influence of aerodynamic force acting on the spacecraft 10 is large. Because the aerodynamic force acting on the spacecraft 10 depends strongly on the angle-of-attack (that is, an angle between the flow of air and the reference axis 10a of the spacecraft 10), it is effective for realization of the good attitude angle control that the angle-of-attack is contained in the measurement quantities acquired by the measuring system 7. Because the angle-of-attack is affected on a flow direction of air, note that the angle-of-attack does not have a correspondence relation of one to one with the attitude angle.

Here, in case of actual implementation of the spacecraft 10, it is sometimes difficult to provide the angle-of-attack detecting section 15 which detects an angle-of-attack. In such a case, the angle-of-attack may be calculated from another measurement quantity. For example, because the angle-of-attack has an influence on the acceleration of the spacecraft 10, the angle-of-attack may be calculated based on the acceleration detected by acceleration detecting section 16.

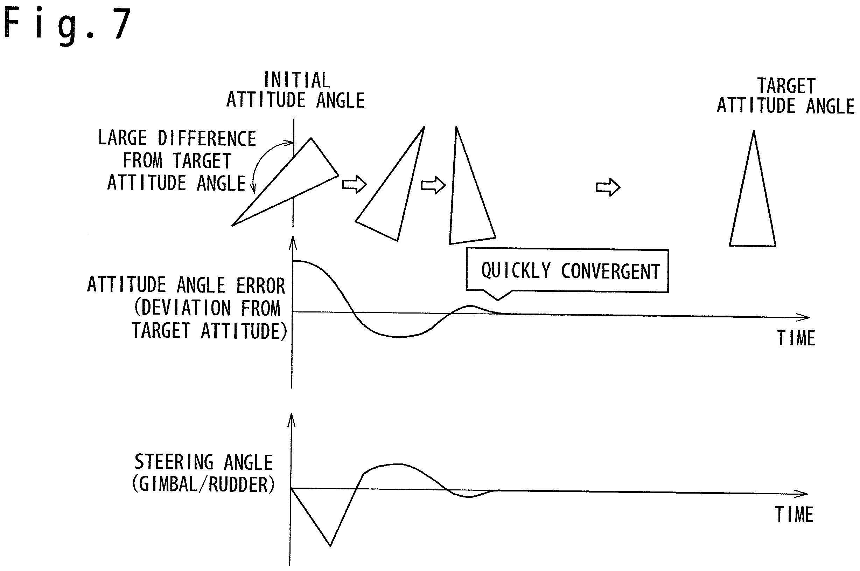

FIG. 7 is a graph conceptually showing an example of behavior of the spacecraft 10 when the non-linear optimal control using the stable manifold method in the attitude change is carried out. As mentioned above, in the landing motion of the present embodiment, there is a large difference between the attitude angle in start of the attitude change and the target attitude angle in the vertical landing. However, in the present embodiment, by using the non-linear optimal control using the stable manifold method, the convergence is improved such that the attitude angle converges on the target attitude angle quickly. In addition, by using the non-linear optimal control using the stable manifold method, it is possible to improve the robustness.

As described above, the embodiments of the present invention have been specifically described. However, the present invention is not limited to the above-mentioned embodiments. It could be understood to the skilled person that the present invention can be carried out with various changes and modifications.

The present invention is based on Japanese Patent Application No. JP 2016-175109 as a basis application and claims a priority based on it. The disclosure of the basis application is incorporated herein by reference.

## Claims

1. A spacecraft configured to carry out an attitude change to a target attitude angle for a vertical landing after reentry into the atmosphere in a nose entry, and to land after the attitude change, comprising:
a body ;
a rocket engine installed on the body;
an aerodynamic element which is installed on the body and on which an aerodynamic force acts;
a measurement quantity acquiring system configured to acquire at least one measurement quantity of the spacecraft; and
a control device configured to calculate an operation quantity for an operation of at least one of a gimbal angle of the rocket engine and an aerodynamic characteristic of the aerodynamic element,
wherein the control device is configured to calculate the operation quantity according to the measurement quantity by a non-linear optimal control using a stable manifold method in the attitude change such that the attitude angle of the spacecraft is changed to the target attitude angle.

2. The spacecraft according to claim 1, wherein the at least one measurement quantity contains an angle-of-attack of the spacecraft, and
wherein the control device controls the attitude angle of the spacecraft in response to the angle-of-attack in the attitude change.

3. The spacecraft according to claim 1, wherein the control device calculates the angle-of-attack of the spacecraft based on the at least one measurement quantity, and
wherein the control device controls the attitude angle of the spacecraft in response to the calculated angle-of-attack in the attitude change.

4. The spacecraft according to claim 3, wherein the at least one measurement quantity contains an acceleration of the spacecraft, and
wherein the control device calculates the angle-of-attack of the spacecraft based on the acceleration.

5. The spacecraft according to claim 1, wherein the control device controls the spacecraft to start the attitude change after the spacecraft reaches a setting region set previously above a landing point for the spacecraft to be landed, and to descend and land at the landing point, while controlling a position of the spacecraft in a horizontal plane, after the attitude angle of the spacecraft is controlled to the target attitude angle through the attitude change.

6. A spacecraft configured to carry out an attitude change to a target attitude angle for a vertical landing after reentry into the atmosphere in a nose entry and to land after the attitude change, comprising:
a body;
a rocket engine installed on the body;
an aerodynamic element which is installed on the body and on which an aerial force acts;
a measurement quantity acquiring system configured to acquire at least one measurement quantity of the spacecraft; and
a control device configured to calculate an operation quantity for an operation of at least one of a gimbal angle of the rocket engine and an aerodynamic characteristic of the aerodynamic element,
wherein the at least one measurement quantity contains an angle-of-attack of the spacecraft, and
wherein the control device is configured to calculate the operation quantity such that the attitude angle of the spacecraft changes to the target attitude angle according to the said angle-of-attack in the attitude change.

7. A landing method of a spacecraft which comprises a body; a rocket engine installed on the body; and an aerodynamic element installed on the body for an aerial force to act,
the landing method comprising:
(A) reentering a spacecraft into the atmosphere in a nose entry;
(B) carrying out an attitude change of the spacecraft such that an attitude angle of the spacecraft changes to a target attitude angle in which a vertical landing is carried out, after the (A) step; and
(C) carrying out the vertical landing of the spacecraft after the attitude change,
wherein the (B) step comprises:
acquiring at least one measurement quantity of the spacecraft; and
calculating an operation quantity to operate at least one of a gimbal angle of the rocket engine and an aerodynamic characteristic of the aerodynamic element according to the measurement quantity by a non-linear optimal control using a stable manifold method such that the attitude angle of the spacecraft changes to a target attitude angle.

8. The landing method of the spacecraft according to claim 7, further comprising:
(D) making the spacecraft fly while getting a lift force from the atmosphere such that the spacecraft reaches a setting region set previously near a landing point at which the spacecraft is to be landed,
wherein the attitude change is started after the spacecraft reaches the setting region.
